# EUROPEAN PATENT SPECIFICATION

(11) **EP 0 640 911 B1**
(45) Date of publication and mention of the grant of the patent: **04.08.1999**
(21) Application number: 94908481.8
(22) Date of filing: 02.03.1994
(51) Int. Cl.: G06F 1/00, G06F 9/445, G06F 11/00

(54) **METHOD FOR EXECUTING SOFTWARE PROGRAM AND CIRCUIT DEVICE FOR IMPLEMENTING THE METHOD**
VERFAHREN ZUR DURCHFÜHRUNG EINES SOFTWARE-PROGRAMMS UND SCHALTUNGSANORDNUNG ZUR DURCHFÜHRUNG DIESES VERFAHRENS.
PROCEDE D'EXECUTION DE PROGRAMME LOGICIEL ET DISPOSITIF A CIRCUITS UTILISE POUR REALISER CE PROCEDE

(30) Priority: 10.03.1993 JP 7629993
(43) Date of publication of application: 01.03.1995
(73) Proprietor: SEGA ENTERPRISES, LTD., Tokyo 144 (JP)
(72) Inventor: NAGASHIMA, Takeshi, Sega Enterprises, Ltd., Tokyo 144 (JP)
(74) Representative: Prüfer, Lutz H., Dipl.-Phys.
(86) International application number: JP9400333
(87) International publication number: WO9420901

(56) References cited:
- EP-A- 0 200 704
- EP-A- 0 268 419
- EP-A- 0 378 385
- EP-A- 0 430 843
- JP-A- 2 210 562
- JP-A- 2 253 338
- JP-A- 58 101 349
- US-A- 5 155 768

## Description

The present invention relates to a method for executing a software program according to the preamble of claim 1 or to a circuit equipment according to the preamble of claim 4. More particularly, it relates to a method for executing a software program, which is advantageous to use assets of software programs accumulated in an external memory detachably connected to the hardware equipment and a circuit for performing the method.

In recent years, a software program is supplied, in various kinds of forms, for example, ROM cartridge, floppy disk and so on, for use in hardware equipment exclusively provided in a micro computer, according to the spread of the micro computer.

Further, it is general to perform a security check on a software program to prevent an illegally copied/created software program from being used in the hardware equipment.

Various kinds of the methods for checking the security for the software program, have been proposed in, for example, U.S. Patent No. 4,442,486 (corresponding to Japanese laid-open Patent Publication No. 101349/1983), U.S. Patent No. 4,462,076 and U.S. Patent No. 5,155,768 (corresponding to Japanese laid-open Patent Publication No. 266051/1991).

In the method described in U.S. Patent No. 4,462,076, the content of a fixed address in the memory of a game cartridge, which is detachably connected to console equipment, in which a CPU is provided, is compared with the security message stored in the CPU of the console equipment. As the result of this comparison, if the correspondence is not detected, the cartridge is refused to accept, that is, the program stored in the memory of the cartridge cannot be executed.

In the method described in the U.S. Patent No. 4,422,486, when a device installed with a program is connected to the console equipment, a message corresponding to the signal obtained from the device is indicated on display equipment. That is, a fixed message, for example, "This equipment uses the invention of the patent application filed in D/M/Y", or the like is displayed. If it is different from the indication of the message, it is controlled so as to be prohibited to use the device providing the program after then.

Further, in the method described in the U.S. Patent No. 5,155,768, a security circuit provided in the console equipment is initialized when the power of the console equipment is ON. The console equipment is made possible to operate by a signal generating due to the initialization of the security circuit.

Whenever the security circuit is accessed, the security code read from the game cartridge is compared with the security code generated in the console equipment. And if they do not correspond, the operation of the console equipment is stopped by a reset signal generated from the security circuit.

According to the conventional method for checking the security, users may have only software, which is acceptable to the console equipment as an asset. However, if the users want to buy console equipment which is a new version, instead of the console equipment which has been owned by the users before then, a large amount of software assets can not be used any longer because of the security check.

In this case, the users can not use the software assets effectively, and it is also inconvenience from a social point of view not to use the software assets.

On the other hand, business forms are diversified according to the large supply of software programs in recent years. One of the business forms is that the service for distributing the game software to subscribed and registered users, via transmission channels, for example, cable television and the like, is being introduced.

In this case, it is inconsiderable that the software program of which license is not permitted by a software supply company is distributed, that is, the software which is copied or created illegally by a distributor, is distributed to the users through a transmission channel. This is because it is general that a license contract has been made between the software supply company and distributor.

Accordingly, it is no need to include a signal of the security check code and the like suitable to the security check in the software program, which is distributed. Because of that, if the software which does not include the signal of the security check code and the like is distributed, the users can reduce the time required for down-loading the software program distributed in their own equipment.

Further, it is not effective because it takes much time to perform the security check, every time the distributed software is executed, although the software is genuine. And it is therefore required to solve the troublesome job.

Meanwhile, the console equipment in the game machine owned by a user may be exclusive for using the software distributed via the transmission channel of the cable television and the like, but it is preferable that the equipment can be also used in common for the software program installed in the memory of the cartridge and the like that the user bought individually.

However, in this case, the console equipment of the game machine owned by the user is required to have the function of the security check. Therefore, the software distributed via the transmission channel of the cable television and the like can not be executed because it has no security check code to be checked by the security check function of the equipment.

The EP-A-0 378 385 discloses a method according to the preamble of claim 1 and a circuit equipment according to the preambles of claims 4 to 7, respectively.

It is therefore an object of the present invention to provide a method for executing the software program for loosening the security check function to solve the inconvenience problem and being able to use the software assets effectively, and a circuit equipment performing the method.

The object is solved by the method of claim 1 or by the circuit equipments of claims 4,5,6 or 7.

Further developments of the invention are given in the subclaims.

With the method and the circuit equipment a check function of the console equipment of the game machine is stopped substantially and therefore, the software program distributed without the security code and the like can be executed by the game machine.

The method for executing the software program installed in the console equipment can use the security check method described in the above-described U.S. Patent No. 4,462,076 and 5,155,768.

The method for executing the software program comprises an initializing routine (X) for initializing console equipment for executing a program data, a security check routine (Y) for checking the genuineness of the program data and a program executing routine (Z) for executing the program data by a CPU of the console equipment, when the program data is judged as genuine in the security check routine (Y), wherein the security check routine (Z) is bypassed by resett ing the operation of the CPU at the end point of the initializing routine (X) and executing the program executing routine (Z).

The attached drawings are prepared to help understanding the present invention, and their object is to explain the present invention, entirely, and therefore, the present invention is not limited to the attached drawings.

Fig. 1 is a block diagram of the console equipment of a game machine applying a method according to the present invention.

Fig. 2 is a diagram showing one example of an address space of the console equipment of the game machine employing the present invention.

Fig. 3 is an operation flow chart (an initializing routine and a security check routine) of a method according to the present invention.

Fig. 4 is an operation flow chart (a game executing routine) of a method according to the present invention.

Fig. 5 is a diagram showing a circuit of the first embodiment applying a method according to the present invention.

Fig. 6 is an operation time chart of the circuit of the embodiment shown in Fig. 5.

Fig. 7 is a diagram showing a circuit of the second embodiment applying a method according to the present invention.

Fig. 8 is a block diagram showing the structural example of the shift register 27 shown in Fig. 7.

Fig. 9 is a block diagram showing the structural example of the counter 28 shown in Fig. 7.

Fig. 10 is an operation time chart of the circuit of the embodiment shown in Fig. 7.

Fig. 11 is a block diagram of the structural example of a bank logic circuit 14 shown in Fig. 1.

Fig. 12 is a diagram showing the circuit of the third embodiment applying a method according to the present invention.

Fig. 13 is an operation time chart of the circuit of the embodiment shown in Fig. 12.

Fig. 14 is a diagram showing the circuit of the fourth embodiment applying a method according to the present invention.

### DETAILED DESCRIPTION OF THE PREFERRED EMBODIMENT

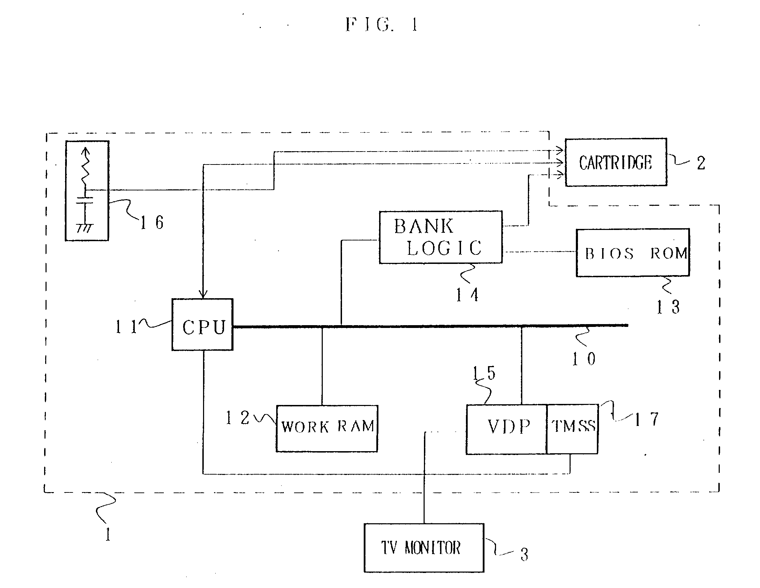

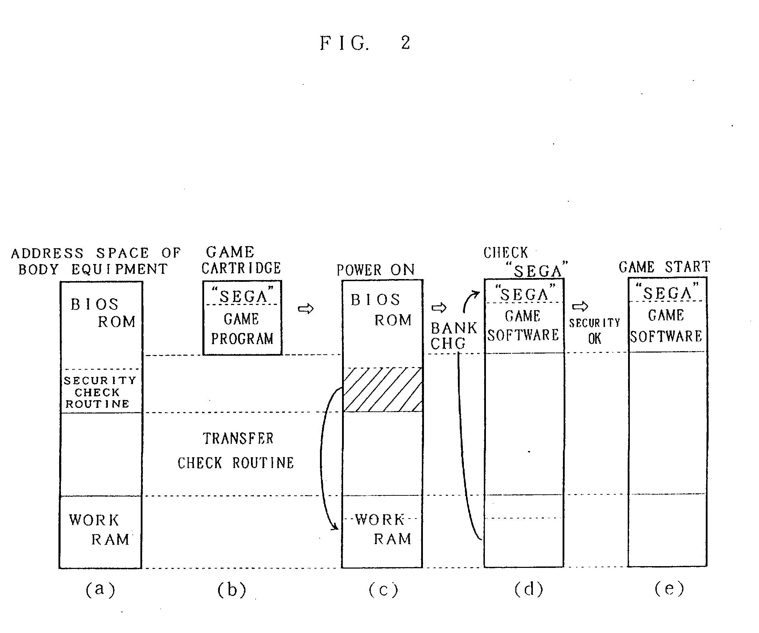

Fig. 1 is a block diagram showing an embodiment of console equipment of a game machine applying a method according to the present invention. Fig. 2 shows one example of an address space of the console equipment of the game machine.

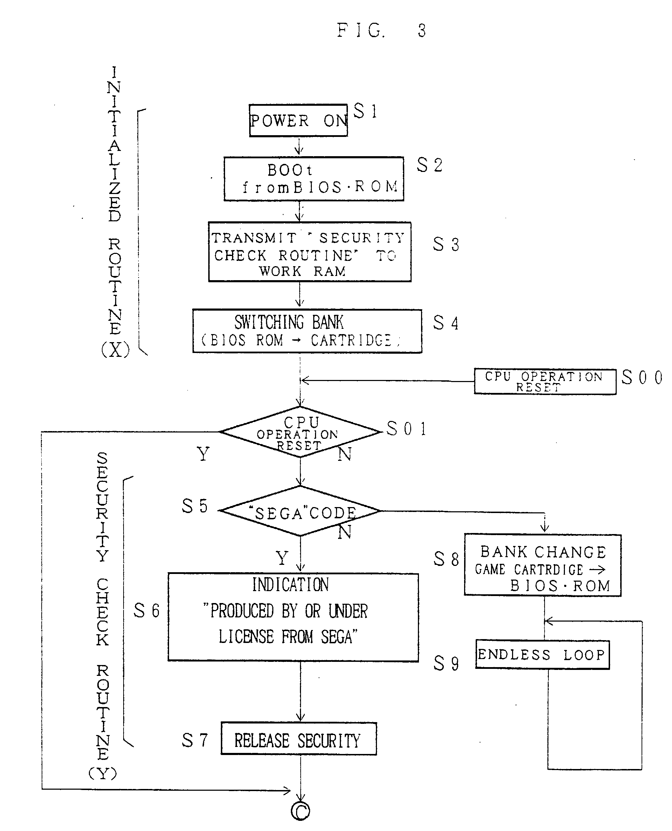

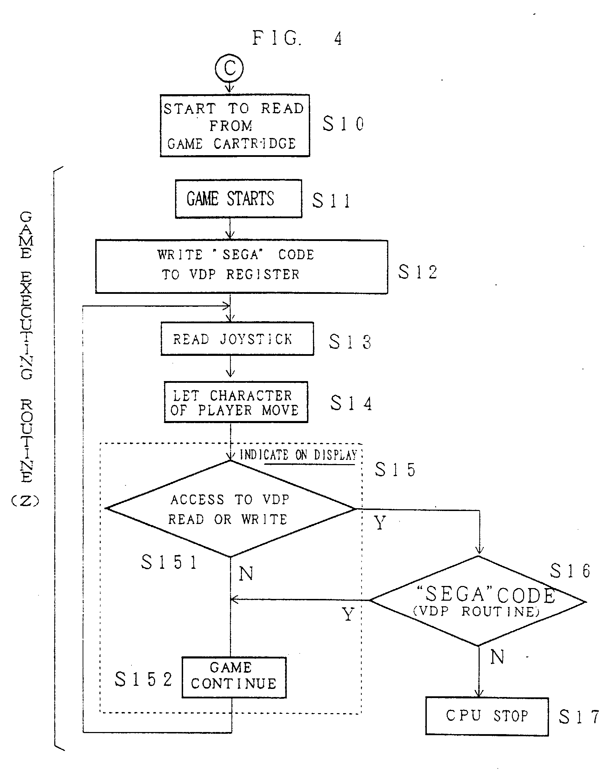

Further, Fig. 3 is an operation flow chart (an initializing routine and a security check routine) of a method of the present invention, and Fig. 4 is an operation flow chart (a game executing routine) of the method of the present invention.

In Fig. 1, reference numeral "1" is the console equipment of the game machine which is used for executing software. A cartridge 2, which is a program storage medium having a ROM and the like that stores the program data of the software.

Still more, a joint adaptor (not shown in the diagram) is connected instead of the cartridge 2, in the case where a game software and so on are distributed via a channel of CATV and the like to the console equipment of the game machine 1. The joint adaptor comprises a memory for storing software to be distributed via the channel of CATV and the like and to be down loaded therein.

The cartridge 2 is properly installed to the console equipment 1, and then the program data of the software stored in a ROM and the like of the cartridge 2 is read out and is executed after finished the fixed procedures.

The software is executed by displaying an image data on a TV monitor 3, if necessary. Although the present invention is not limited to the kinds of software, the console equipment 1 will be explained as the console equipment of a game machine for executing the game software as a typical example as follows.

An input device, such as a joy stick, a control pad or the like, not shown in Fig. 1 is attached to the console equipment of the game machine 1 to input a control information, for example, for shifting a cursor according to the contents of the game displayed on the TV monitor 3.

In the console equipment of the game machine 1, each kinds of circuit components are connected to a bus 10. That is, CPU 11, a random access memory 12 for work (WORK RAM), a read-only memory 13 for storing OS of BIOS and the like (BIOS ROM), a memory of ROM and the like for storing the program in the cartridge 2 (hereinafter referred to as ROM), a bank logic 14 for switching a bank (BANK) to the BIOS ROM 13, a video display processor (VDP) 15, and further, a reset logic circuit 16 for controlling reset of the console equipment of the game machine 1 and so on are jointed to the bus 10.

Fig. 2 shows an address space of the memory of the console equipment of the game machine 1 controlled by the CPU 11, according to the explanation of the method of the present invention. That means, it shows an address space area of WORK RAM 12 and an address space area of the BIOS ROM 13 in (a) of Fig. 2.

Further, an area for storing the program for a security check routine to check the security described later is maintained in the address area of the BIOS ROM 13. And an area located between the address space of the BIOS ROM 13 and that of the WORK RAM 12 is an address space maintained to use the VDP 15 and the like for displaying an image on the TV monitor 3.

Furthermore, the address space for the ROM provided in the game cartridge 2 is located as a part of the address space of the BIOS ROM 13 selected exclusively by the bank logic circuit [refer to (b) of Fig. 2].

The operation including the security check function in the console equipment of the game machine 1 will be explained according to the operation flow chart shown in Figs. 3 and 4, as follows.

### [INITIALIZING ROUTINE (X)]

At first, the power of the console equipment of the game machine 1 is turned ON with a switch, not shown in the diagram (**STEP S1**). Next, BIOS software (Basic I/O system software) of the BIOS ROM 13 is started by the control of CPU 11 (**STEP S2**).

The initialization of each part is performed by the BIOS. That is, the program of the security check routine (Y) stored in the BIOS ROM 13 is transferred to the WORK RAM 12 on this initialized step (routine X) [refer to (c) of Fig. 2] (**STEP S3**).

Hereupon, the bank logic circuit 14 performs switching the bank of the address space of the BIOS ROM 13 to that of the address space for the ROM stored in the game cartridge 2 [refer to (d) of Fig. 2] (**STEP S4**).

Further, the VDP 15 which is a kind of the control equipment for controlling the image displayed on the TV monitor 3 has a register as a constituting component, in Fig. 1. The address area of this register is distributed in the address space other than the address space of the BIOS ROM 13 and the address space of WORK RAM 12, which are subject to switch the banks in (c) and (d) of Fig. 2.

On the initializing routine (X), a fixed security code, for example, "SEGA" is written to a register of control circuit (TMSS) 17 for security system constituting as a part of the VDP 15, when the CPU 11 accesses to the VDP 15 for the first time.

### [SECURITY CHECK ROUTINE (Y)]

Next, the security check routine (Y) is executed according to the conventional method and apparatus. In this security check routine (Y), the program of the security check routine stored in the BIOS ROM 13 which is transferred to the WORK RAM 12 shown in (c) of Fig. 2 is executed.

This content to be executed is same as the security check according to the above-described U.S. Patent No. 4,462,076. After executing this check routine, the fixed security code "SEGA" written in the register of TMSS 17 after the CPU 11 accesses the VDP 15 is eliminated.

As described above, the bank logic circuit 14 has switched the bank of the BIOS ROM 13 to that of the ROM address of the game cartridge 2. Therefore, the ROM of the game cartridge 2 is accessed by the security check routine program transferred to and stored in the WORK RAM 12 [refer to the arrow shown in (d) of Fig. 2].

Accordingly, the security code stored in the ROM of the game cartridge 2 is read out, and the contents stored in the ROM is compared with the security code "SEGA" which is a genuiness code (**STEP S5**).

In the case where the fixed security code "SEGA" corresponds to the code stored in the ROM of the game cartridge 2, the indication of "PRODUCED BY OR UNDER LICENSE FROM SEGA" and the like is performed to indicate the genuineness of the game cartridge 2 on the TV monitor 3 via the VDP 15 (**STEP S6**). After then, the flow of the security check is released (**STEP S7**), and the game can be executed, so that the control is transferred to the game executing routine (X).

Meanwhile, in the case where the security code stored in the ROM of the cartridge 2 does not correspond to the security code "SEGA" on the **STEP S5**, that is, the game cartridge is not genuine, it is restarted to switch the bank (**STEP S8**). Accordingly, the address space of the ROM of the game cartridge 2 is returned to the address space of the BIOS ROM 13. Therefore, the program of the BIOS enters to the endless loop (**STEP S9**), so that the CPU 11 becomes to be in the state of hung up, thus prohibiting the execution of the game.

### [GAME EXECUTING ROUTINE (Z)]

Fig. 4 is a flow chart of the executing operation of the game. When the program is released from the security check routine (**STEP S7**), the game program stored in the ROM of the game cartridge 2 is read from the start address (**STEP S10**), and the game is started [refer to (e) of Fig. 2] (**STEP S11**).

The instruction data for making the fixed code "SEGA" stored in the register of the TMSS 17 (for example, the address of $A14000 is distributed) as well as the game program data is included in the ROM of the game cartridge 2. According to this instruction data, the fixed code "SEGA" is written to the appropriate address (**STEP S12**).

After then, the main sequence of the game program is executed. The main sequence has processing steps, for example, to read the state of the joy stick operated by the operator (**STEP S13**), process the data to move the character of a player, corresponding to the state (**STEP S14**), and indicate the image on the display according to the data (**STEP S15**).

Hereupon, the TMSS 17 always compares the code written in the register of the TMSS 17 with the genuine code "SEGA". If the irregular code is written, when the access is performed from the CPU 11 to the VDP 15, the operation of the CPU 11 is stopped. The operation of this TMSS 17 is performed independently from the operation of the CPU 11.

That is, in the case where the VDP 15 is not accessed (**STEP S151:N**), the game is continued as it is (**STEP S152**). On the other hand, in the case where the VDP 15 is accessed (**STEP S151:Y**), the comparison of TMSS 17 is performed, that is, whether the fixed address (the address of the above-described $A14000) stored in the register of TMSS 17 is "SEGA" or not. As the result, if it is not "SEGA" (**STEP S16:N**), the operation of the CPU 11 is stopped so as to stop the progression of the game (**STEP S17**). If it is "SEGA", the game can be continued as it is (**STEP S152**).

As explained above, in a method for executing the program which has been conventionally performed, the execution of the game is permitted via the security check routine (Y). To permit the game to execute, the code for the security check, for example "SEGA" should be stored in the program stored in the ROM of the cartridge 2.

Further, in the game executing routine (Z), it is also required that the instruction data, "Access to VDP 15 and write the code of "SEGA" to the VDP 15" is included in the program data to check the genuine of the program, even if the game is being continued.

According to this condition, the case may occur where other code other than the code of "SEGA" is used as a security check code in the console equipment of the game machine of a new version, of which function is updated.

Further, as described above, when the software which is genuine essentially is distributed via a transmission channel of the CATV and so on, there is no need to include the security check code in the program data.

In this case, the game can not be executed on the operation flow in the above-described conventional equipment.

Accordingly, in this case, there is a problem, that is, the game cartridge can not be used effectively as assets, so that the problem becomes the social economical loss. Further, such conventional equipment is not effective to accept a new service, for example, in performing the distribution of the software via the transmission channel of the CATV and so on. It is therefore an object of the present invention to solve this problem.

### [THE EXECUTION OF THE GAME ACCORDING TO THE PRESENT INVENTION]

### FIRST EMBODIMENT OF THE PRESENT INVENTION:

The operation of the CPU 11 is reset at the timing when the initializing routine (X) is finished, to solve this problem (**STEP S00**) [refer to Fig. 3].

In the case where the method of the present invention is performed, the operation for resetting the CPU 11 (**STEP S00**) is inserted on the operation flow shown in Fig. 3. As explained above referring to Fig. 3, the bank of the BIOS ROM 13 is switched to the bank of the game cartridge 2 (**STEP S4**) on the initializing routine (X). Further, the security code stored in the ROM of the game cartridge 2 is read on the security check routine (Y), and the contents stored in the ROM of the cartridge 12 is compared with the code of "SEGA" which is a genuine code (**STEP S5**). when it is not corresponded to the genuine code, the bank is switched from the game cartridge 2 to the BIOS ROM 13 (**STEP S8**). Accordingly, to be concrete, the operation for resetting the CPU 11 (**STEP S00**) may be performed while the bank is on the side of the software of the game cartridge 2, that is, before the operation of the **STEP S8** has been completed.

When it is detected that the operation for resetting the CPU 11 (**STEP S00**) is performed (**STEP S01:Y**), the CPU 11 starts to read the program from the game cartridge 2 immediately (**STEP S10**).

Accordingly, in the case where the operation for resetting the CPU 11 (**STEP S00**) is inserted, the CPU 11 detects the reset, is released from the security check routine (Y), and can enter to the game execution routine (Z) immediately.

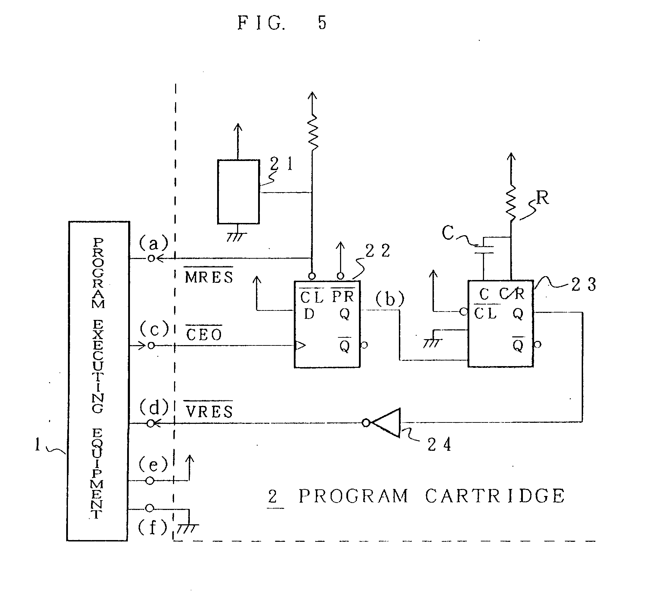

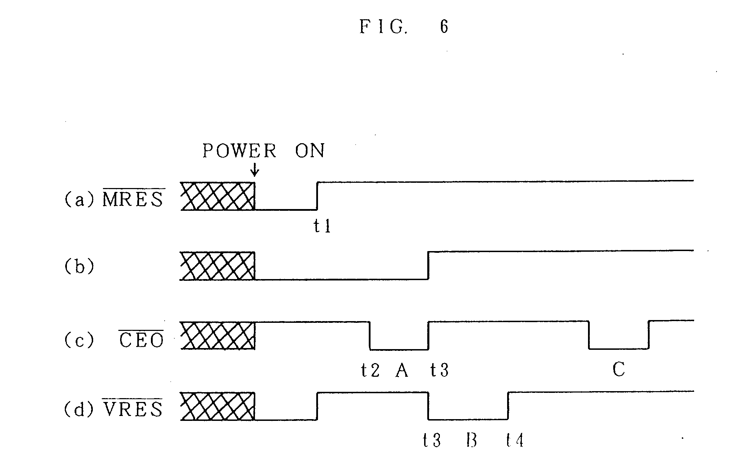

Fig. 5 shows a circuit of one embodiment for realizing the feature of the first embodiment according to the present invention. Fig. 6 is an operation time chart corresponding to the circuit of the embodiment shown in Fig. 5.

In Fig. 5, reference numeral "1" is a program execution equipment, that is, the console equipment of the game machine 1 shown in Fig. 1. Further, the circuit surrounded by the broken line is a circuit of the embodiment to apply the method of the present invention. The circuit of this embodiment is not always required to provide on the cartridge 2, but it may be prepared as independently circuit equipment.

Each of (a) through (d) shown in Fig. 5 corresponds to each of (a) through (d) of the time charts shown in Fig. 6. Further, (e) and (f) shown in Fig. 5 are a power source and a ground terminal, respectively.

In here, when a power switch, not shown in the diagram, of the console equipment of the game machine 1 is turned ON [refer to (a) of Fig. 6], the reset signal (/MRES: active low) which is an output of the reset circuit 21 continues to be in low level for a constant interval. After then, it becomes to be in high level at the time t1, the signal is inputted from the terminal (a) to the console equipment of the game machine 1, which is a program execution equipment and to a clear terminal /CL of a latch circuit 22 constituted of D-FF and the like.

The reset circuit 21 which is a kind of the timer circuit is provided to remove the unsettled interval until the voltage is increased after the power of the console equipment of the game machine 1 is supplied, and to control the timing of the entire system.

The CPU reset signal /VRES is risen, and the chip enable signal (CEO: active low) is inputted from the console equipment of the game machine 1 to the terminal (c) at the time t1 when the reset signal /MRES becomes to be in high level [refer to (c) of Fig. 6]. And then, timing A (the period of time from t2 to t3) during which the CPU 11 accesses the ROM of the cartridge 2 for the first time is given.

On this timing A, the processing on the initializing routine X (refer to Fig. 3) is performed by the software processing of the CPU 11. And the bank of the BIOS is switched to that of the cartridge 2 by the software processing of the CPU 11 [(b) and (c) shown in Fig. 2].

Then, the Q output of the latch circuit 22 [which is in high level same as (b) of Fig. 6] is inputted to a reset pulse occurrence circuit 23. The reset pulse occurrence circuit 23 is to output the signal having the fixed pulse time width which is determined by the resistor R and the capacitor C.

Accordingly, if the Q output of the latch circuit 22 rising at the timing t3 is inputted, the signal having the pulse time width up to t4 is outputted. This signal is led to and reversed by the inverter 24. The reversed output becomes the CPU reset signal /VRES which is in low level at the timing B (the period of time from t3 to t4) shown in (d) of Fig. 6.

This CPU reset signal /VRES which is in low level is changed to the CPU reset signal /VRES which is in high level at the time of t4, and the CPU 11 is reset by the reset signal /VRES given via the terminal (d). This is a state where the processing of the **STEP S00** is performed on the operation flow shown in Fig. 3, that is, the state where the security check routine (Y) is bypassed and the security is released (**STEP S7**), as described above. Accordingly, the game can be started (**STEP S10**).

Then, the system reset signal /MRES is in high level and the CPU reset signal /VRES is also in high level, so that the CPU 11 can read [refer to the timing C shown in (c) of Fig. 6] and execute the game program by accessing the ROM of the cartridge 2.

The game program is started without performing the security check routine (Y) according to the additional circuit applying the first embodiment of the present invention, as described above. Accordingly, the game can be executed, even if the fixed security code do not exist in the ROM of the game cartridge 2 or the distributed game software program.

Further, the security check routine (Y) explained in Fig. 3 is omitted without being performed, so that the fixed code "SEGA" written in the register of the TMSS 17 by the access of CPU 11 on the initialization of the VDP 15 on the initializing routine (X) is saved, as it is, without eliminating it.

Accordingly, the fixed code "SEGA" has already been saved as it is, without eliminating it and therefore, even if there is no instruction of "The fixed code SEGA is stored in the register of the VDP 15" in the ROM of the cartridge 2 to check the genuine of the program during playing of the game, the game can be continued on the game executing routine (Z) shown in Fig. 4, without stopping the operation of the CPU 11, because the result of the comparison of the code by the TMSS 17 indicates always genuine.

### Second embodiment of the present invention:

The second embodiment has a feature for controlling to stop the operation of the CPU 11 during the time that the initializing routine (X) by the BIOS ROM 13 (refer to Fig. 3) is executed.

Accordingly, in the second embodiment, the function for switching the bank performed by the software processing of the CPU 11 is replaced by a hardware processing and controlled so as to switch the bank to that of the cartridge 2 before the CPU 11 is reset. Therefore, when the CPU 11 is reset, it can access to the cartridge 2 immediately, so that the game can be executed by bypassing the security check routine (Y) performed by the BIOS ROM 13.

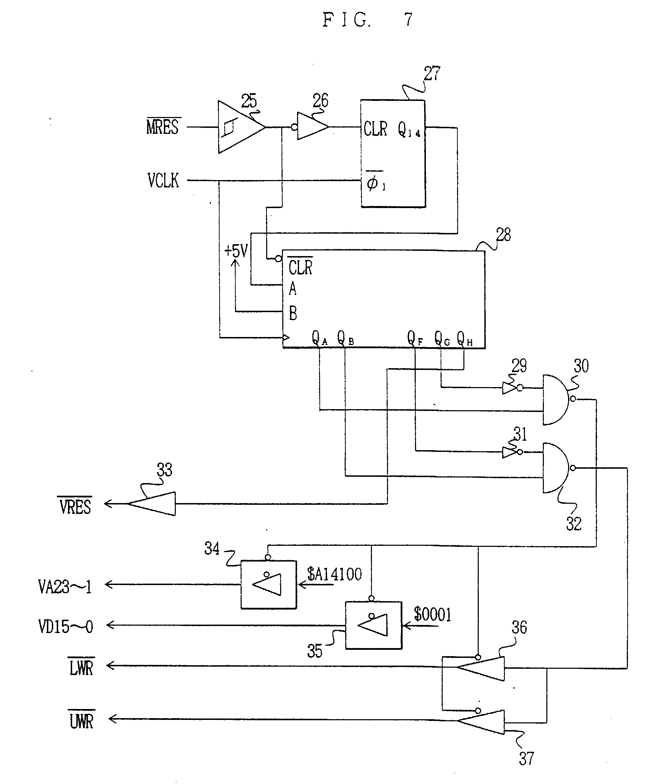

Fig. 7 is a circuit of the second embodiment according to the present invention. This circuit of the embodiment can be both provided on the cartridge 2 as well as the circuit of the embodiment shown in Fig. 5, and provided as an exclusive circuit equipment.

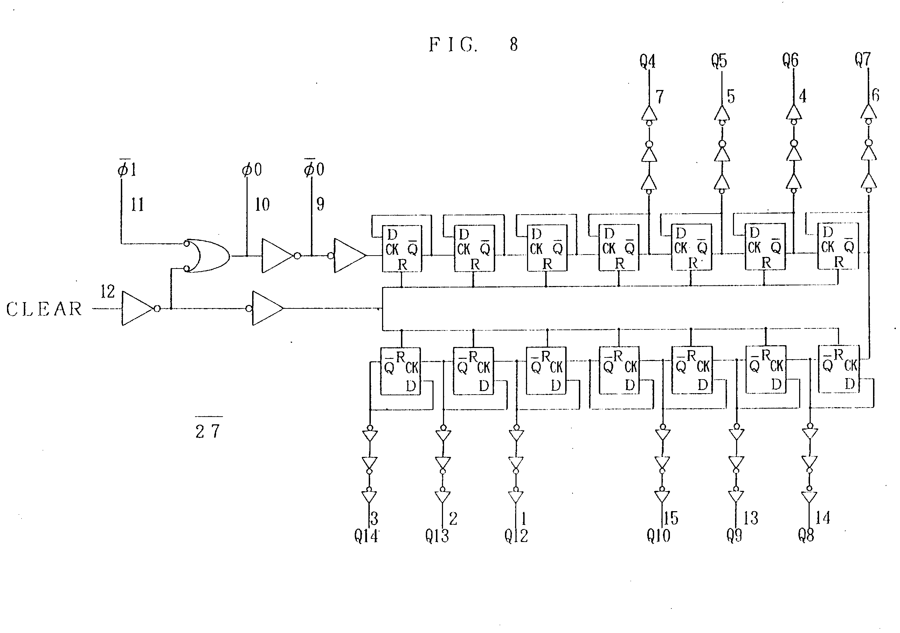

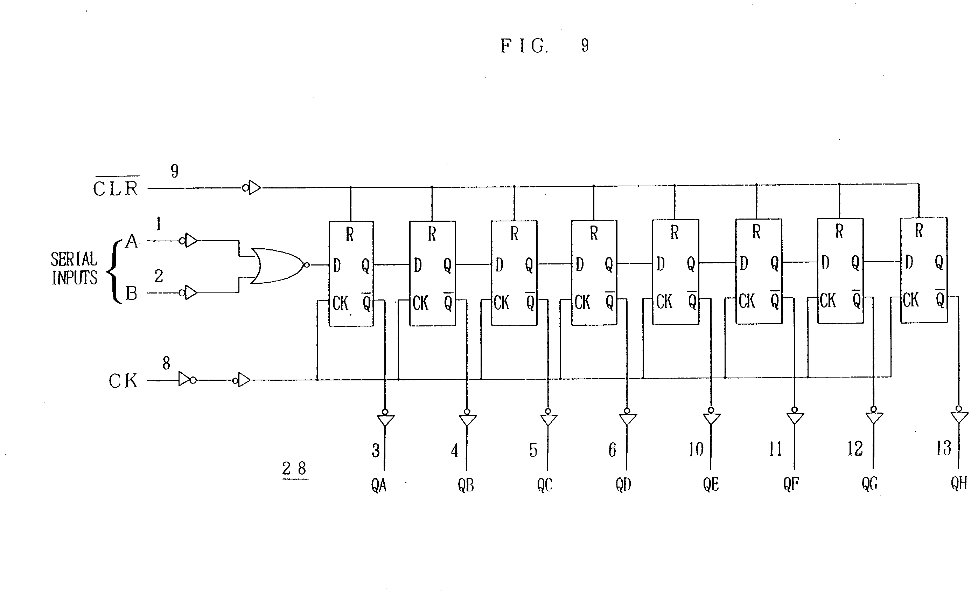

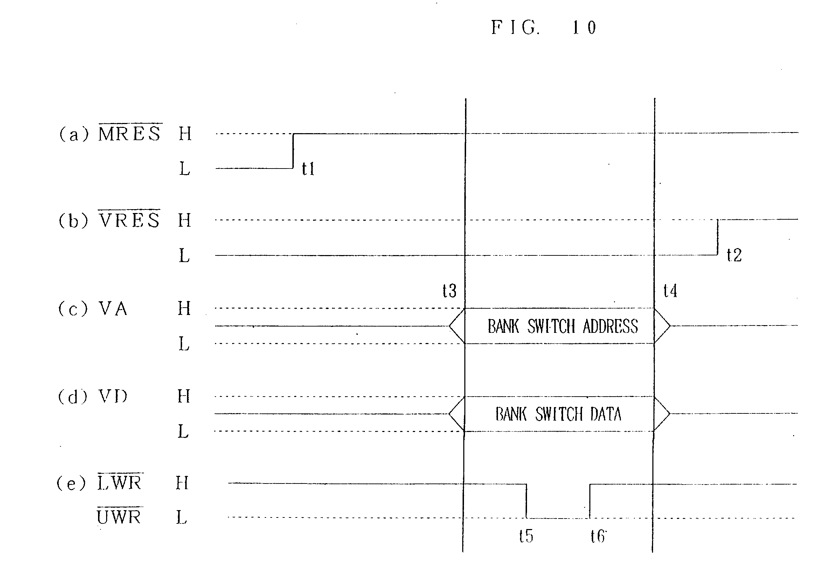

Further, Figs. 8 and 9 are block diagrams showing the structural examples of the counter 27 and the shift register 28 constituting the circuit of Fig. 7. Furthermore, Fig. 10 is an operation time chart corresponding to Fig. 8.

Hereupon, when the power switch, not shown in the diagram, of the console equipment of the game machine 1 is turned ON, in Fig. 7, the reset signal of the console equipment /MRES [refer to (a) of Fig. 10] is inputted to a Schmitt trigger circuit 25. The output of the Schmitt trigger circuit 25 becomes to be in high level at the time t1 after the settled interval, and is inputted to the counter 27 via the inverter 26, and inputted to the clear terminal /CLR of the shift register 28.

In here, the Schmitt trigger circuit 25 is provided to eliminate the unsettled interval up to rising the voltage, after the power of the console equipment of the game machine 1 is turned ON, and it functions as same as the reset circuit 21 shown in Fig. 5.

The clock signal VCLK from the console equipment of the game machine 1 is inputted to the counter 27 and the shift register 28. The counter 27 constituting the fourteen pieces of D-FF has a structure shown in Fig. 8. And the output Q14 of the D-FF on the end stage is inputted to the A terminal of the shift register 28.

On the other hand, the shift register 28 is constituted of the eight stages of D-FF, as shown in Fig. 9. Accordingly, the count value in the shift register 28 is reset by the output of the Schmitt trigger circuit 25, that is, the reset signal of the console equipment /MRES, at the time tl shown in Fig. 10. And then, it is incremented by the output Q14 of D-FF on the end stage of the counter 27.

Further, after the outputs QA, QB, QF, QG and QH of the shift register 28 are logically processed by the inverters 29 and 31 and the NAND gates 30 and 32, the timings of the CPU reset signal /VRES [(b) of Fig. 10], shown in Fig. 10, the bank switch addresses VA 23 through 1, the bank data VD 15 through 0 and the write timing signal [(e) of Fig. 10] are given.

That is, the CPU reset signal /VRES is outputted when the shift register 28 counts the maximum value, and sent to the console equipment side of the game machine 1, via the open collector buffer 33. That means, the CPU reset signal /VRES is kept at low level up to the time t2 and becomes to be in high level when coming to the time t2. Accordingly, the game program stored in the ROM of the cartridge 2 is not accessed by the CPU 11, up to coming to the time t2.

On the other hand, tristate buffers 34 and 35 are controlled so as to output the bank switch addresses VA 23 through 1 and the bank data VD 15 through 0, respectively during the interval from time t3 to t4. Further, these tristate buffers 34 and 35 can be substituted with a gate component, such as an open collector, an open drain and the like.

Meanwhile, the bank switch addresses VA23 through 1 from the tristate buffer 34 is $14100, which is an address of the bank switching given to the input side constantly. Further, the bank data from the tristate buffer 35 is $0001 given to the input side constantly in the same way. $0001 is a bank data, that means, bank switching to the cartridge 2.

Furthermore, the CPU write signal is outputted from the gates 36 and 37 within the period of time from t5 to t6. This CPU write signal is shown with /LWR and /UWR in the console equipment of the game machine 1. It is always at high level, and the timing of the CPU write signal is given when transferred to low level.

Then, /LWR and /UWR are at high level, as the operation of the CPU 11 is stopped until the CPU reset signal /VRES becomes to be in high level. In opposite, it becomes to be in the state of the CPU write signal by giving the signal transferring /LWR and /UWR to low level with the larger driving force from the additional circuit to the console equipment of the game machine 1.

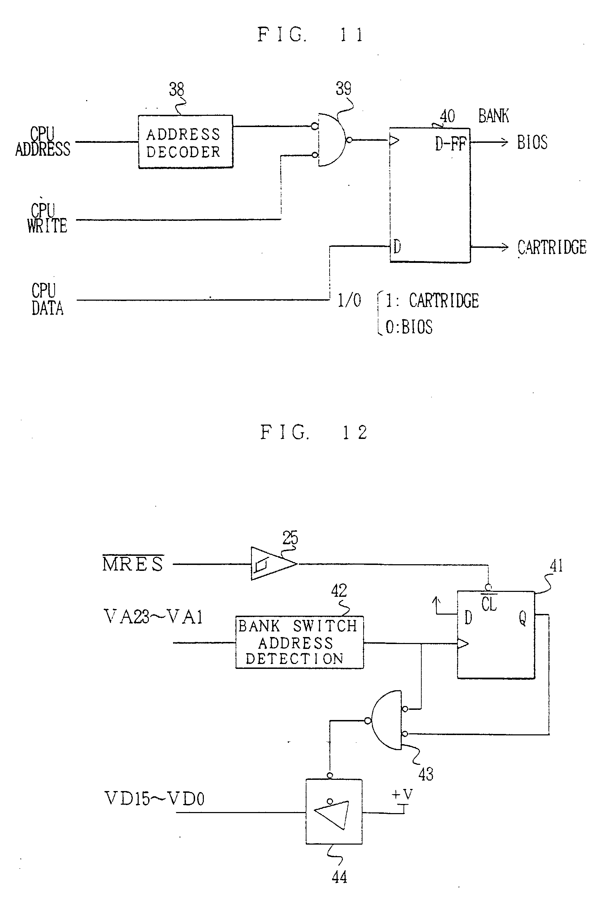

Fig. 11 is a structural example of the bank logic circuit 14 shown in Fig. 1. In the circuit, "38" is an address detection circuit, which receives inputting the bank switch addresses VA 23 through 1, detects and outputs $14100, that is the bank switch command.

Further, when the outputs of the address detection circuit 38 and the CPU write signal are inputted to the NAND gate circuit 39, the write trigger input is given to the D-FF 40 from the NAND gate circuit 39. Accordingly, the data given from the data input terminal of the D-FF 40 is written, then.

In the second embodiment shown in Fig. 7, as the bank switch command $14100 and the bank data $0001 are given while the CPU write signal /UWR and /LWR is at the low level, the D-FF 40 sets "1" and switches the bank to that of the cartridge 2, as shown in the operation time chart of Fig. 10.

Returning to Fig. 10, the CPU reset signal /VRES becomes to be in high level at the time t2, so that the CPU is reset. This means the state of the CPU reset (**STEP S00**) described in the operation flow of Fig. 3. Then, as the bank is switched to the cartridge 2, as described above, it becomes possible immediately to bypass the security check routine (Y) and read the game program from the game cartridge 2 as well as in the first embodiment [**STEP S10:** refer to Fig. 4].

Accordingly, it becomes possible to start a game for the game program not including any security check (**STEP S111**). Further, "SEGA" which is a genuine code can be written to the register of the TMSS 17, by providing the same circuit.

### Third embodiment of the present invention:

Although the security check routine (Y) is bypassed on the operation flow of Fig. 3 in the above described first and second embodiments, in the third embodiment, it is controlled so as to always success in the security check continuing from the initializing routine (X) by operating a specified signal line at the timing when the BIOS operates on the step of the initializing routine (X).

The security code "SEGA" is recoded from the address No. $100 of the BIOS ROM in the same form as the game cartridge 2, as an original data for comparing the security code with the contents of the game cartridge 2.

The security check is released, as it is detected that the same "SEGA" code is recorded at the address No. $100 in the game cartridge 2 on the security check routine (Y).

Accordingly, if the bank is not switched from the BIOS to the cartridge on the **STEP S4** in the flow of Fig. 3, the BIOS compares the "SEGA" code with that stored in the inside of the BIOS, not with the content stored in the inside of the game cartridge 2 on the **STEP S5**. In this case, as the code "SEGA" is stored from the address No. $100 in the BIOS ROM, the correspondence is always detected and the security check is released (**STEP S7**: refer to Fig. 3), thus executing the game on the game executing routine (Z).

In the third embodiment, there is a merit that the additional circuit is simplified by comparing with the second embodiment. The third embodiment of the additional circuit will be explained as follows.

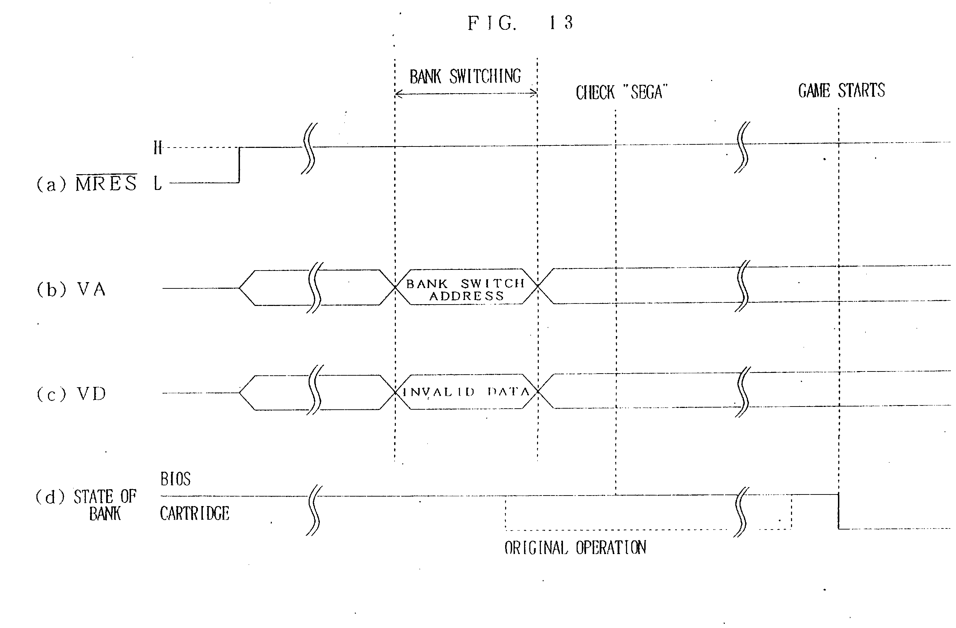

Fig. 12 is a structural block diagram of the circuit of the third embodiment according to the present invention. The circuit is provided in the game cartridge 2 or as an exclusive circuit equipment, as same as the above-described embodiment. Fig. 13 is an operation time chart corresponding to the circuit.

When the power is ON with the switch of the console equipment of the game machine 1, not shown in the diagram, the reset signal /MRES having the raising time point formed by the Schmitt trigger circuit 25 is inputted to the clear terminal /CL of the latch circuit 41. The latch circuit 41 is same as the latch circuit 22 of Fig. 5.

The address signal for switching the bank (VA 23 through VA 1) is inputted to the bank logic circuit 14 by the CPU 11 and inputted to the address signal detecting decoder 42 for switching the bank of the additional circuit at the same time, when the reset signal /MRES becomes to be in high level.

Then, the address signal for switching bank (VA 23 through VA1) is inputted from the CPU 11 to the address decode circuit 38 in the detailed embodiment of the bank logic circuit 14 explained above (Fig. 11). The address signal (VA 23 through VA 1) for switching the bank is detected by the address decode circuit 38 and the active low signal is inputted to one input terminal of the NAND gate 39.

At the same time, the address signal (VA 23 through VA 1) for switching the bank is detected in the address signal detecting decoder 42 of the additional circuit. Then, the active low signal is inputted to one terminal of the tristate buffer 44, via the gate 43. In this case, the tristate buffer 44 outputs a logical 0 as a data, as the potential of the input terminal is connected to +V.

This output is sent to the data input terminal D of the bank logic circuit 14, by passing the bus 10 to the console equipment of the game machine 1. And then, the data logic 1 is sent to the data input terminal D to switch the bank from the BIOS to the cartridge.

Accordingly, the logic 1 and the logic 0 are inputted at the same time to the data input terminal D of the bank logic circuit 14, so that the both logic levels are collided. However, the logic output 0 from the additional circuit may become valid by making the driving power of the additional circuit larger than that of the CPU 11.

Further, in Fig. 11, in the case where the write signal from the CPU 11 is sent and the address decoder 38 detects the address for switching the bank from the CPU 11, the trigger signal is inputted from the NAND gate 39 to the trigger terminal of D-FF 40.

Accordingly, the latch circuit D-FF 40 sets the logic 0 appeared in the data input terminal D. In this case, it becomes to be in the state of BIOS ROM, without switching the bank to the cartridge on the **STEP S4** of Fig. 3 [refer to (d) of Fig. 13].

Therefore, the correspondence of the code "SEGA" is detected in the security check routine (Y) to be continued (**STEP S5**), so that the security check is released (**STEP S7**), thus starting the game.

Furthermore, in the case where the method according to the present invention is not executed, the data from the CPU 11 is not forced to invalidate, and the bank is switched to that of the cartridge, as shown with the broken line in (d) of Fig. 13, so that the correspondence or incorrespondence of the code "SEGA" in the cartridge 2 is detected as an original operation.

### Fourth embodiment of the present invention:

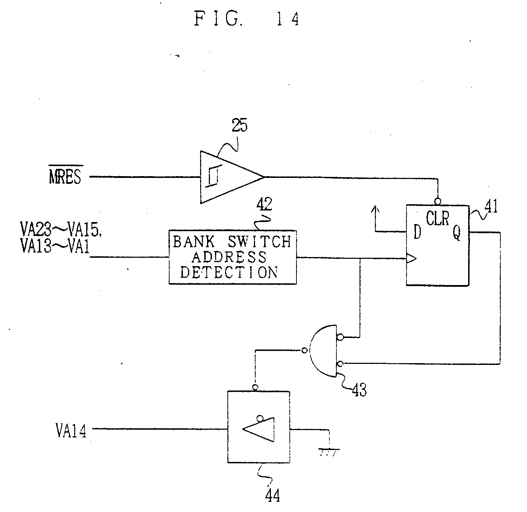

Fig. 14 is a block diagram of the circuit of the fourth embodiment of the present invention. As described above, in the third embodiment shown in Fig. 12, when the bank switch address VA 23 through VA 1 occurs from the CPU 11, the bank data is made as an invalid data and sent to the bank logic circuit 14.

In opposite, in the fourth embodiment, the bank switch address is made as an invalid address, so that the detection of the bank switch address VA 23 through VA 1 is not performed on the address decoder 38.

When the address No. $14100 is a control address for performing the bank switching, the address code VA 23 through VA 1 corresponding to the address $14100 is outputted from the CPU 11, and inputted to the bank switch circuit 14 via the bus, as the control for performing the bank switching.

At the same time, the address code VA 23 through VA 1 is also sent to the bank switch address detection circuit 42 on the side of the circuit shown in Fig. 14, via the bus. In the embodiment shown in Fig. 14, the address bits VA 23 through VA 15 and VA 13 through VA 1, excluded VA 14 from the address code VA 23 through VA 1 from the CPU 11 are inputted to the address detection circuit 42.

That is, as the address expresses with hexadecimal, VA 14 which is the fourteenth bit becomes "1", in the case where the address $14100 is expressed. Further, VA 14 becomes "0" in the address $10100. Therefore, the address bits VA 23 through VA 15 and VA 13 through VA 1 excluded VA 14 are inputted to the address detection circuit 42, the detection output is outputted in either case of the address $14100 or that of the address $10100.

Then, the latch circuit 41, the gate circuit 43 and the tristate buffer 44 described in Fig. 12 are same in Fig. 14 and the input side of the tristate buffer 44 is connected to the ground, so that the address bit VA 14 is outputted as "0" and sent to the side of the console equipment of the game machine 1 via the bus.

On the other hand, the address code VA 23 through VA 1 for the bank switch address given from the CPU 11 appears on the bus, and the bit VA 14 given from the CPU 11 is "1". Accordingly, it is collided with the VA 14 given from the tristate buffer 441 which is "0". However, in this case, the driving force of the tristate buffer 44 makes larger than that of the CPU 11, so that the VA 14 becomes "0" by force.

In this case, the bank switch address is not detected on the address decoder 38 in the bank logic circuit 14 shown in Fig. 11. Accordingly, the state of the D-FF 40 is not changed, and the bank is kept on the BIOS ROM side as it is, even if the bank data given from the CPU is "1" to switch the bank to the cartridge side.

Therefore, as explained for the third embodiment shown in Fig. 12, the "SEGA" code of the BIOS ROM own is compared [Fig. 3: refer to the **STEP S5**], the security check routine (Y) is released [Fig. 3: refer to the **STEP S7**], and the game can be started.

As the present invention is explained based on the above-described embodiments, it becomes possible to realize the present invention with adding the simple circuit and to use the asset of the software program effectively, without the restriction of the security check, even if, for example, the hardware of the different equipment is used according to the present invention.

Further, there is no need to include the security check code and the like to the software which is distributed by the distribution service business of the software according to the present invention, so that it becomes possible that the subscribers may receive services effectively.

Furthermore, although the above-described embodiment is explained laying stress on game software programs, the present invention is not limited to use such the programs. The program can be stored in a CD-ROM, and the like, other than a ROM cartridge.

## Claims

1. A method for executing a software program comprising the steps of:
an initializing routine (x) including the step of switching the bank of a BIOS ROM (13) included in a console equipment (1) having a CPU (11) to the bank of a software program stored in an external storage equipment (2);
a security check routine (y) for checking the genuineness of the software program; and
a program executing routine (z) for executing the software program by the CPU (11) of the console equipment (1), when the software program is judged as a genuine program on the security check routine (y)
characterized in that
the execution of the software program on the CPU (11) by the program executing routine (z) is started by resetting the CPU (11) to release from the security check routine (y), while the bank of the BIOS ROM (13) is switched to the bank of the software program stored in the external storage equipment (2).

2. A method according to claim 1,
wherein there is a further step of stopping the operation of the CPU (11) within a given period of time after supplying the power, and the step of switching the bank of the BIOS ROM (13) to the bank of the software program is performed by a hardware circuit (25-37).

3. A method according to claim 1,
wherein the software program stored in the external storage equipment (2) is sent via a transmission channel of CATV and down-loaded in the external storage equipment (2).

4. Circuit equipment attached to console equipment (1) having a CPU (11) for executing a software program comprising :
an initializing routine (x) switching the bank of a BIOS ROM (13) included in the console equipment (1) having the CPU (11) to the bank of a software program stored in an external storage equipment (2),
a security check routine (y) for checking the genuineness of the software program, and
a program executing routine (z) for executing the software program by the CPU (11) of the console equipment (1), when the software program is judged as a genuine program on the security check routine (y);
characterized by
said circuit equipment including
means (21-24) for generating a CPU reset signal (/VRES) for resetting the CPU (11), based on a console equipment reset signal (/MREs) generated when a power is supplied for resetting the console equipment (1) and based on a chip enable signal (/CEO) for the CPU (11) from the console equipment (1),
wherein the CPU reset signal (/VRES) is outputted for a fixed time internal with a delayed time from the input of the chip enable signal (/CEO).

5. Circuit equipment attached to console equipment (1) having a CPU (11) for executing a software program comprising :
an initializing routine (x) switching the bank of a BIOS ROM (13) included in the console equipment (1) having the CPU (11) to the bank of a software program stored in an external storage equipment (2),
a security check routine (y) for checking the genuineness of the software program, and
a program executing routine (z) for executing the software program by the CPU (11) of the console equipment (1), when the software program is judged as a genuine program on the security check routine (y) ;
characterized by
said circuit equipment including
means (25-28,33) for generating a CPU reset signal (/VREs) for resetting the CPU (11) after a fixed time interval, based on a console equipment reset signal (/MRES) for resetting the console equipment (1) generated by supplying the power; and
means (25-37) for generating and sending bank switch addresses, bank data and write signals (/LWR, /UWR) to the console equipment (1) within the fixed time interval.

6. Circuit equipment attached to console equipment (1) having a CPU (11) for executing a software program comprising :
an initializing routine (x) switching the bank of a BIOS ROM (13) included in the console equipment (1) having the CPU (11) to the bank of a software program stored in an external storage equipment (2),
a security check routine (y) for checking the genuine ness of the software program, and
a program executing routine (z) for executing the software program by the CPU (11) of the console equipment (1), when the software program is judged as a genuine program on the security check routine (y);
characterized by
said circuit equipment including
means (42) for detecting a bank switch address from the CPU (11), and
means (41,43,44) for replacing a bank data for switching to the bank of the software program from the CPU by a bank data for switching to a BIOS ROM by force, when a detection output of the bank switch address from the detecting means (42) is generated.

7. Circuit equipment attached to console equipment (1) having a CPU (11) for executing a software program comprising :
an initializing routine (x) switching the bank of a BIOS ROM (13) included in the console equipment (1) having the CPU (11) to the bank of a software program stored in an external storage equipment (2),
a security check routine (y) for checking the genuine ness of the software program, and
a program executing routine (z) for executing the software program by the CPU (11) of the console equipment (1), when the software program is judged as a genuine program on the security check routine (y) ;
characterized by
said circuit equipment including
means (42) for detecting a bank switch address for controlling the performance of a bank switching from the CPU (11) and
means (41,43,44) for replacing bank switch address from the CPU (11) by an address which is different from the bank switch address and which is an invalid bank switch address by force, when the detection output of the bank switch address from the detecting means (42) is generated.

## Patentansprüche

1. Verfahren zur Durchführung eines Software-Programmes mit den Schritten:
eine Initialisierungsroutine (X) mit dem Schritt des Schaltens der Bank eines BIOS-ROM (13), die in einer Konsolenausrüstung (1) mit einer CPU (11) enthalten ist, zu der Bank eines Software-Programmes, das in einer externen Speicherausrüstung (2) gespeichert ist;
eine Sicherheitsprüfroutine (Y) zum Prüfen der Echtheit des Software-Programmes; und
eine Programmdurchführungsroutine (Z) zur Durchführung des Software-Programmes durch die CPU (11) der Konsolenausrüstung (1), wenn das Software-Programm in der Sicherheitsprüfroutine (Y) als ein echtes Programm beurteilt wird;
dadurch gekennzeichnet,
daß die Durchführung des Software-Programmes auf der CPU (11) durch die Programmdurchführungsroutine (Z) durch Rücksetzen der CPU (11) zum Freigeben von der Sicherheitsprüfroutine (Y) gestartet wird, während die Bank des BIOS-ROM (13) zu der Bank des in der externen Speicherausrüstung (2) gespeicherten Software-Programmes geschaltet wird.

2. Verfahren nach Anspruch 1,
bei dem es einen weiteren Schritt des Stoppens des Betriebes der CPU (11) innerhalb einer gegebenen Zeit davor, nachdem die Leistung angelegt ist, gibt und der Schritt des Schaltens der Bank des BIOS-ROM (13) zu der Bank des Software-Programmes durch eine Hardwareschaltung (25-37) durchgeführt wird.

3. Verfahren nach Anspruch 1,
bei dem das in der externen Speicherausrüstung (2) gespeicherte Software-Programm über einen Übertragungskanal von CATV gesendet wird und in der externen Speicherausrüstung (2) herabgeladen wird.

4. Schaltungsausrüstung, die an einer Konsolenausrüstung (1) mit einer CPU (11) zur Durchführung eines Software-
Programmes angebracht ist, mit einer Initialisierungsroutine (X), die die Bank eines BIOS-ROM (13), die in der Konsolenausrüstung (1) mit der CPU (11) enthalten ist, zu der Bank eines in einer externen Speicherausrüstung (2) gespeicherten Software-Programm schaltet,
einer Sicherheitsprüfroutine (Y) zum Prüfen der Echtheit des Software-Programmes, und einer Programmdurchführungsroutine (Z) zur Durchführung des Software-Programmes durch die CPU (11) der Konsolenaus-rüstung (1), wenn das Software-Programm als eine echtes Programm in der Sicherheitsprüfroutine (Y) beurteilt wird;
dadurch gekennzeichnet,
daß die Schaltungsausrüstung ein Mittel (21-24) aufweist zum Erzeugen eines CPU-Rücksetzsignales (/VRES) zum Rücksetzen der CPU (11) auf der Grundlage eines Konsolenausrüstungsrücksetzsignales (/MRES), das erzeugt wird, wenn Leistung zum Rücksetzen der Konsolenausrüstung (1) geliefert wird, und auf der Grundlage eines Chipfreigabesignales (/CEO) für die CPU (11) von der Konsolenausrüstung (1),
worin das CPU-Rücksetzsignal (/VRES) während eines festen Zeitintervalles mit einer verzögerten Zeit von der Eingabe des Chipfreigabesignales (/CEO) ausgegeben wird.

5. Schaltungsausrüstung, die an einer Konsolenausrüstung (1) mit einer CPU (11) angebracht ist, zur Durchführung eines Software-Programmes, mit
einer Initialisierungsroutine (X), die die Bank eines BIOS-ROM (13), die in der Konsolenausrüstung (1) mit der CPU (11) enthalten ist, zu der Bank eines in einer externen Speicherausrüstung (2) gespeicherten Software-Programmes schaltet,
einer Sicherheitsprüfroutine (Y) zum Prüfen der Echtheit des Software-Programmes, und
einer Programmdurchführungsroutine (Z) zur Durchführung des Software-Programmes durch die CPU (11) der Konsolenausrüstung (1), wenn das Software-Programm als ein echtes Programm in der Sicherheitsprüfroutine (Y) beurteilt wird; dadurch gekennzeichnet,
daß die Schaltungsausrüstung ein Mittel (25-28, 33) aufweist zum Erzeugen eines CPU-Rücksetzsignales (/VRES) zum Rücksetzen der CPU (11) nach einem festen Zeitintervall auf der Grundlage eines Konsolenausrüstungsrücksetzsignales (/MRES) zum Rücksetzen der Konsolenausrüstung (1), das durch Anlegen der Leistung erzeugt wird; und
daß ein Mittel (25-37) vorgesehen ist zum Erzeugen und Senden von Bankschaltadressen, Bankdaten und Schreibsignalen (/LWR, /UWR) zu der Konsolenausrüstung (1) innerhalb des festen Zeitintervalles.

6. Schaltungsausrüstung, die an einer Konsolenausrüstung (1) mit einer CPU (11) angebracht ist, zur Durchführung eines Software-Programmes mit
einer Initialisierungsroutine (X), die die Bank eines BIOS-ROM (13), die in der Konsolenausrüstung (1) mit der CPU (11) enthalten ist, zu der Bank eines in einer externen Speicherausrüstung (2) gespeicherten Software-Programmes schaltet,
einer Sicherheitsprüfroutine (Y) zum Prüfen der Echtheit des Software-Programmes, und
einer Programmdurchführungsroutine (Z) zur Durchführung des Software-Programmes durch die CPU (11) der Konsolenausrüstung (1), wenn das Software-Programm als ein echtes Programm in der Sicherheitsprüfroutine (Y) beurteilt wird;
dadurch gekennzeichnet,
daß die Schaltungsausrüstung ein Mittel (42) zum Erfassen einer Bankschaltadresse von der CPU (11) aufweist und
daß ein Mittel (41, 43, 44) vorgesehen ist zum Ersetzen von Bankdaten zum Schalten von der CPU zu der Bank des Software-Programmes durch Bankdaten zum Schalten zu einem BIOS-ROM zwangsweise, wenn eine Erfassungsausgabe der Bankschaltadresse von dem Erfassungsmittel (42) erzeugt wird.

7. Schaltungsausrüstung, die an einer Konsolenausrüstung (1) mit einer CPU (11) angebracht ist, zur Durchführung eines Software-Programmes, mit
einer Initialisierungsroutine (X), die die Bank eines BIOS-ROM (13), die in der Konsolenausrüstung (1) mit der CPU (11) enthalten ist, zu der Bank eines in einer externen Speicherausrüstung (2) gespeicherten Software-Programmes schaltet,
einer Sicherheitsprüfroutine (Y) zum Prüfen der Echtheit des Software-Programmes, und
einer Programmdurchführungsroutine (Z) zur Durchführung des Software-Programmes durch die CPU (11) der Konsolenausrüstung (1), wenn das Software-Programm als ein echtes Programm in der Sicherheitsprüfroutine (Y) beurteilt wird;
dadurch gekennzeichnet,
daß die Schaltungsausrüstung ein Mittel (42) aufweist zum Erfassen einer Bankschaltadresse zum Steuern der Ausführung eines Bankschaltens von der CPU (11) und
daß ein Mittel (41, 43, 44) vorgesehen ist zum Ersetzen der Bankschaltadresse von der CPU (11) durch eine Adresse, die sich von der Bankschaltadresse unterscheidet und die eine ungültige Bankschaltadresse ist, zwangsweise, wenn die Erfassungsausgabe der Bankschaltadresse von dem Erfassungsmittel (42) erzeugt wird.

## Revendications

1. Procédé pour exécuter un programme logiciel comprenant les étapes suivantes :
une routine d'initialisation (X) incluant l'étape consistant à commuter le banc d'une BIOS ROM (13) incluse dans un équipement de console (1) avec une CPU (11), sur le banc d'un programme logiciel stocké dans un équipement de stockage externe (2),
une routine de contrôle de sécurité (Y) pour contrôler l'authenticité du programme logiciel, et
une routine d'exécution de programme (Z) pour exécuter le programme logiciel par la CPU (11) de l'équipement de console (1), quand le programme logiciel est jugé comme un programme authentique pendant la routine de contrôle de sécurité (Y),
caractérisé en ce que l'exécution du programme logiciel dans la CPU (11) par la routine d'exécution de programme (Z) est lancée en réinitialisant la CPU (11) pour se libérer de la routine de contrôle de sécurité (Y) tandis que le banc de la BIOS ROM (13) est commuté sur le banc du programme logiciel stocké dans l'équipement de stockage externe (2).

2. Procédé selon la revendication 1, dans lequel il existe une étape supplémentaire consistant à arrêter le fonctionnement de la CPU (11) dans la limite d'une période de temps donnée après l'alimentation en électricité, et l'étape consistant a commuter le banc de la BIOS ROM (13) sur le banc du programme logiciel est effectuée par un circuit matériel (25 à 37).

3. Procédé selon la revendication 1, dans lequel le programme logiciel stocké dans l'équipement de stockage externe (2) est envoyé par l'intermédiaire d'une voie de transmission de télévision câblée et téléchargé dans l'équipement de stockage externe (2).

4. Dispositif à circuits relié à un équipement de console (1) avec une CPU (11) pour exécuter un programme logiciel, comprenant
une routine d'initialisation (X) pour commuter le banc d'une BIOS ROM (13) incluse dans l'équipement de console (1) avec la CPU (11) sur le banc d'un programme logiciel stocké dans un équipement de stockage externe (2),
une routine de contrôle de sécurité (Y) pour contrôler l'authenticité du programme logiciel, et
une routine d'exécution de programme (Z) pour exécuter le programme logiciel par la CPU (11) de l'équipement de console (1), quand le programme logiciel est jugé comme un programme authentique pendant la routine de contrôle de sécurité (Y),
caractérisé en ce que
ledit dispositif à circuits inclut des moyens (21 à 24) pour générer un signal de réinitialisation de CPU (/VRES) pour réinitialiser la CPU (11), sur la base d'un signal de réinitialisation d'équipement de console (/MRES) généré quand l'alimentation est fournie pour réinitialiser l'équipement de console (1) et sur la base d'un signal de validation de circuit (/CEO) pour la CPU (11) provenant de l'équipement de console (1), dans lequel le signal de réinitialisation de CPU (/VRES) est sorti pendant un intervalle de temps fixe avec un temps retardé provenant de l'entrée du signal de validation de circuit (/CEO).

5. Dispositif à circuits relié à un équipement de console (1) avec une CPU (11) pour exécuter un programme logiciel, comprenant
une routine d'initialisation (X) pour commuter le banc d'une BIOS ROM (13) incluse dans l'équipement de console (1) avec la CPU (11) sur le banc d'un programme logiciel stocké dans un équipement de stockage externe (2),
une routine de contrôle de sécurité (Y) pour contrôler l'authenticité du programme logiciel, et
une routine d'exécution de programme (Z) pour exécuter le programme logiciel par la CPU (11) de l'équipement de console (1), quand le programme logiciel est jugé comme un programme authentique pendant la routine de contrôle de sécurité (Y),
caractérisé en ce que ledit dispositif à circuits inclut
des moyens (25 à 28, 33) pour générer un signal de réinitialisation de CPU (/VRES) pour réinitialiser la CPU (11) après un intervalle de temps fixe, sur la base d'un signal de réinitialisation d'équipement de console (/MRES) pour réinitialiser l'équipement de console (1) généré par l'alimentation en électricité, et
des moyens (25 à 37) pour générer et renvoyer des adresses de commutation de banc, des données de banc et des signaux d'écriture (/LWR, /UWR) à l'équipement de console (1) dans la limite de l'intervalle de temps fixe.

6. Dispositif à circuits relié à un équipement de console (1) avec une CPU (11) pour exécuter un programme logiciel, comprenant
une routine d'initialisation (X) pour commuter le banc d'une BIOS ROM (13) incluse dans l'équipement de console (1) avec la CPU (11) sur le banc d'un programme logiciel stocké dans un équipement de stockage externe (2),
une routine de contrôle de sécurité (Y) pour contrôler l'authenticité du programme logiciel, et
une routine d'exécution de programme (Z) pour exécuter le programme logiciel par la CPU (11) de l'équipement de console (1), quand le programme logiciel est jugé comme un programme authentique pendant la routine de contrôle de sécurité (Y),
caractérisé en ce que ledit dispositif à circuits inclut
des moyens (42) pour détecter une adresse de commutation de banc à partir de la CPU (11), et
des moyens (41, 43, 44) pour remplacer de force des données de banc pour commuter sur le banc du programme logiciel de la CPU par des données de banc pour commuter sur une BIOS ROM, lorsqu'une sortie de détection de l'adresse de commutation de banc des moyens de détection (42) est générée.

7. Dispositif à circuits relié à un équipement de console (1) avec une CPU (11) pour exécuter un programme logiciel, comprenant
une routine d'initialisation (X) pour commuter le banc d'une BIOS ROM (13) incluse dans l'équipement de console (1) avec la CPU (11) sur le banc d'un programme logiciel stocké dans un équipement de stockage externe (2),
une routine de contrôle de sécurité (Y) pour contrôler l'authenticité du programme logiciel, et
une routine d'exécution de programme (Z) pour exécuter le programme logiciel par la CPU (11) de l'équipement de console (1), quand le programme logiciel est jugé comme un programme authentique pendant la routine de contrôle de sécurité (Y),
caractérisé en ce que ledit dispositif à circuits inclut
des moyens (42) pour détecter une adresse de commutation de banc pour commander l'exécution d'une commutation de banc à partir de la CPU (11), et
des moyens (41, 43, 44) pour remplacer de force l'adresse de commutation de banc de la CPU (11) par une adresse qui est différente de l'adresse de commutation de banc et qui est une adresse de commutation de banc invalide, lorsque la sortie de détection de l'adresse de commutation de banc des moyens de détection (42) est générée.
